# EUROPÄISCHE PATENTSCHRIFT

(11) **EP 1 884 035 B1**
(45) Veröffentlichungstag und Bekanntmachung des Hinweises auf die Patenterteilung: **17.07.2013**
(21) Anmeldenummer: 06755204.2
(22) Anmeldetag: 16.05.2006
(51) Int. Cl.: H04B 3/56, H04B 5/00, H04L 12/40, G01D 21/00

(54) **RÜCKWIRKUNGSFREIE AUSKOPPLUNG VON CAN-BUS-SIGNALEN**
EXTRACTION OF CAN-BUS-SIGNALS WITHOUT FEEDBACK
EXTRACTION UNIDIRECTIONNELLE DE SIGNAUX DE BUS CAN

(30) Priorität: 24.05.2005 DE 102005023893; 05.08.2005 DE 102005037596; 02.09.2005 DE 102005042060
(43) Veröffentlichungstag der Anmeldung: 06.02.2008
(73) Patentinhaber: Continental Teves AG & Co. oHG, 60488 Frankfurt am Main (DE)
(72) Erfinder: RIETH, Peter, 65343 Eltville (DE); KELLING, Enno, 65760 Eschborn (DE); MENZEL, Marc, 35043 Marburg (DE)
(74) Vertreter: Brand, Markus
(86) Internationale Anmeldenummer: PCT/EP2006/062332
(87) Internationale Veröffentlichungsnummer: WO 2006/125733

(56) Entgegenhaltungen:
- EP-A- 1 189 393
- DE-A1- 10 343 844
- FR-A- 2 812 437

## Beschreibung

Moderne Fahrzeuge sind mit einer Vielzahl von geregelten Geräten und Sensoren versehen, wie beispielsweise einem geregelten Bremssystem, einem geregelten Lenksystem und einer geregelten Federung. Dabei besitzt in der Regel jedes dieser Geräte eine eigene ECU, die die gemessenen Ist-Werte mit vorgegebenen Soll-Werten vergleicht und dem Vergleichsergebnis entsprechende Ausgangssignale abgibt. Das Regelverhalten der einzelnen Geräte kann wiederum von dem Zustand anderer geregelter Geräte abhängig sein. So kann beispielsweise das Verhalten der geregelten Lenkung von dem Zustand der Federung bzw. dem durch die ECU der Federung berechneten Ist-Wert abhängig sein. Auf diese Weise ist es möglich, dass bei einer im langsamen Tempo befahrenen schlechten Straße eine Winkeländerung des Lenkrades eine sehr viel größere Änderung des Lenkwinkels verursachen kann als dies beim schnellen Befahren einer ebenen Straße der Fall ist. Die einzelnen Geräte und Sensoren sind somit alle oder zum großen Teil miteinander vernetzt. Hierbei werden Informationen zwischen den ECU's der einzelnen Geräte über ein Netzwerk ausgetauscht. Über dieses Netzwerk können dabei beispielsweise Messwerte gesendet werden, wie die Drehzahl des Motors, die Beschleunigung des Fahrzeugs, der Gierwinkel des Fahrzeugs, der Reifendruck, der Schlupf der Reifen, der Lenkwinkel des Fahrzeugs, die Geschwindigkeit des Fahrzeugs über Grund, die Motor- oder Raddrehzahl, die Öl- und Kühlwassertemperatur, die Beschleunigung und Gierrate.

In der Regel werden nur wenige dieser über das genannte Netzwerk laufenden Informationen auf der Instrumententafel des Fahrzeugs dem Fahrer angezeigt. Die Anzeige dieser Informationen beschränkt sich oft auf die Temperatur des Kühlwassers und die Geschwindigkeit. Vielfach ist es aber für die Fahrer von Fahrzeugen wünschenswert noch Zugriff auf weitere in dem Netzwerk ausgetauschte Informationen zu haben, die unter Umständen erheblich über die Informationen hinausgehen, die in dem vom Hersteller ausgelieferten Fahrzeug für den Fahrer auf Instrumententafeln zur Verfügung gestellt werden. Dies gilt beispielsweise für Fahrer, die daran interessiert sind zu wissen, welche Werte z.B. die Motor- oder die Raddrehzahl, die Öltemperatur, die Beschleunigung und die Gierrate während der Fahrt einnehmen oder wie ein Fahrzeug sich in bestimmten Verkehrssituationen verhält und welche Werte einzelne Parameter dabei annehmen, wie beispielsweise die Länge einer Bremsstrecke beim Bremsen auf einem definierten Untergrund.

Es besteht also eine Aufgabe der Erfindung darin, dem Fahrer eines Fahrzeugs zusätzliche Informationen über den Zustand des Fahrzeugs zur Verfügung zu stellen, welche über das hinausgehen, was dem Fahrer üblicherweise auf Instrumententafeln im Fahrzeug angeboten wird. Dieser Zugriff auf die in dem Netzwerk ausgetauschten Informationen soll nachträglich, also nach Auslieferung des Fahrzeugs möglich sein. Um diesen nachträglichen Zugriff auf diese Informationen zu gewähren bedarf es einer Einrichtung, die die Informationen von dem Fahrzeugnetzwerk abgreift, ohne dass die Verkabelung des Fahrzeuges verändert wird, da ein Eingriff in die Verkabelung eines Kfz's, wenn dies durch eine nicht geschulte Fachkraft durchgeführt wird, zum Erlöschen der allgemeinen Betriebserlaubnis für dieses Fahrzeug führen kann. Es ist weiterhin Aufgabe der Erfindung, dass durch die nachträglich eingerichtete Auskopplung der gewünschten Informationen der Informationsfluss in dem Netzwerk mit Sicherheit nicht behindert oder gar geändert wird, so dass die Auskopplung der Informationen hinsichtlich ihrer Wirkung auf den Datenfluss im Netzwerk vernachlässigbar gering ist.

Die vorliegende Erfindung geht daher aus von einer Schaltungsanordnung gemäß Anspruch 2 beziehungsweise einem Verfahren gemäß Anspruch 1 und löst die Aufgabe durch die in dem kennzeichnenden Teil von Anspruch 1 bzw. Anspruch 2 aufgeführten Merkmale. Die Erfindung besteht im Prinzip also darin, die von den auf dem Netzwerk ausgetauschten Signalen verursachten (elektromagnetischen) Felder auszuwerten und aus den so ausgekoppelten Signalen die gewünschten Informationen herauszufiltern. Die vorliegende Erfindung beschreibt weiterhin einen Sensor, welcher für die erfindungsgemäße Schaltungsanordnung und zur Durchführung des erfindungsgemäßen Verfahrens geeignet ist.

Die Informationen zwischen den einzelnen geregelten Geräten und messenden Sensoren eines Fahrzeugs werden üblicherweise über einen CAN-Bus ausgetauscht. In Weiterbildung der Erfindung empfiehlt es sich daher die Merkmale nach Anspruch 3 für die erfindungsgemäße Schaltungsanordnung anzuwenden.

Obwohl auch die Auswertung magnetischer Felder zur Auskopplung der Signale auf dem CAN-Bus möglich ist wird in Weiterbildung der Erfindung entsprechend den Merkmalen nach Anspruch 4 das durch die Signale bedingte elektrischen Feld des CAN-Busses ausgewertet, da sich hierdurch eine vergleichsweise preiswerte und einfach aufgebaute Schaltung ergibt. Bevorzugt wird dabei der Sensor der erfindungsgemäßen Schaltungsanordnung entsprechend den Merkmalen nach Anspruch 5 als Kondensator ausgestaltet, wobei der CAN-Bus selbst einen der beiden Leiterplatten des Kondensators bildet.

Die vorliegende Erfindung ist mit besonderem Vorteil anwendbar auf einen CAN-Bus, welcher die Ausgestaltung nach Anspruch 6 aufweist. Dabei werden die elektrischen Felder der beiden CAN-Leitungen durch den Sensor abgetastet.

Um den Sensor der erfindungsgemäßen Schaltungsanordnung besonders einfach nachträglich montieren zu können empfiehlt sich die Merkmalskombination nach Anspruch 7.

Einen besonders einfachen Aufbau für den Sensor erhält man durch die Anwendung der Merkmale nach Anspruch 8. Weitere vorteilhafte Ausgestaltungen der Erfindung zeigen die Merkmale der Unteransprüche.

Die Erfindung betrifft weiterhin ein Navigationssystem, welches den beschriebenen Sensor oder die beschriebene Schaltungsanordnung zum Signalabgriff gemäß der vorliegenden Erfindung umfasst.

Das Navigationssystem ist vorzugsweise in einem PDA bzw. mobilen Computer implementiert. Entsprechend kann das Navigationssystem auch ein Anbaugerät sein, welches für den nachträglichen, festen Einbau in das Fahrzeug vorgesehen ist. Bekannte mobile Navigationssysteme dieser Art, welche keinen CAN-Datenzugriff besitzen, stützen sich zur Positionsbestimmung ausschließlich auf die Positionsdaten, die von einem GPS Empfänger stammen. Diese Positionsdaten sind häufig recht ungenau, da z.B. bei einer Abschattung der von Satteliten stammenden GPS-Signale gröbere Ungenauigkeiten entstehen können. Bei ebenfalls im Stand der Technik bekannten fest im Fahrzeug installierten Navigationssystemen werden deswegen noch Informationen der Raddrehzahlsensoren und ggf. auch der Beschleunigungs- und Drehratensensoren ausgewertet, um auch in Gebieten mit schlechtem oder ohne GPS-Empfang zu navigieren. Durch die Erfindung ist es möglich, auch bei mobilen oder nachträglich fest installierten Navigationssystemen die benötigten Fahrzeugsignale zur Genauigkeitsverbesserung mitheranzuziehen ohne das Fahrzeug dadurch unzulässig (z.B. Verletzung der Garantiebestimmung oder Betriebserlaubnis durch Aufschneiden des CAN-Kabels) zu verändern. Hierzu besitzt das Navigationssystem vorzugsweise ein Anschlusskabel, welches den weiter oben beschriebenen Sensor umfasst.

Nach einer weiteren bevorzugten Ausführungsform kann die CAN-Information auch dem mobilen Computer oder dem Anbaugerät mit dem implementierten Navigationssystem zugesandt werden, wodurch sich für diese eine spürbare Verbesserung Ihrer Leistung ergibt.

Der Teil der Erfindung der sich auf die Weiterleitung der empfangenen CAN-Signale über eine Funkstrecke bezieht, lässt sich natürlich auch ohne die berührungslose Ankopplung sehr vorteilhaft für die Verbesserung eines Navigationssystems auf Basis eines mobilen Computers oder Anbaugerät nutzen.

Nachfolgend wird die Erfindung mittels Ausführungsbeispielen an Hand von Figuren näher beschrieben. Es zeigen
Fig. 1 in vereinfachter Darstellung die Verbindung eines Sensors mit einem CAN-Bus,
Fig. 2 ein Blockschaltbild zur Darstellung der Verbindung des Sensors in Fig. 1 mit einer Auswerteschaltung und einem PDA,
Fig. 3 in symbolischer Darstellung den Aufbau einer Signalaufbereitung für die Auswerteschaltung in Fig. 2 und
Fig. 4 eine Abgriffvorrichtung, mit der das Konzept des Sensors besonders einfach umgesetzt werden kann.

In zeitgemäßen Fahrzeugen wird als Netzwerk fast immer ein CAN-Bus genutzt. Insbesondere der so genannte Fahrzeug-CAN (engl. Powertrain CAN), an den Motor-, Bremsen- und Getriebesteuergerät angeschlossen sind, stellt hierbei die meisten Informationen über den Zustand des Fahrzeugs zur Verfügung. Dieser CAN-Bus wird üblicherweise über ein ungeschirmtes, verdrilltes Zwei-Draht Kabel geführt.

Um die Information, die auf dem CAN-Bus als Folge von Strom- bzw. Spannungsimpulsen liegt, berührungslos und weitgehend rückwirkungsfrei abzugreifen gibt es erfindungsgemäß zwei Möglichkeiten:

Die erste Möglichkeit besteht in einer Messung des magnetischen Feldes, das durch den Strom erzeugt wird, der in den CAN-Drähten fließt. Um die erste Möglichkeit zu realisieren wird jeweils eine Rogowski Spule um jeden einzelnen der beiden Drähte des CAN Kabels gelegt. Eine Rogowski Spule ist bekanntlich ein Ferritkern, der von einer Drahtspule umwickelt wird. Diese Art von Spule wird benutzt um den magnetischen Fluss durch die Drahtspule und damit das zu gewinnende induzierte Signal zu maximieren. Die Stromsignale auf dem CAN-Bus induzieren in den Spulen Signale, die das differenzierte Bild der CAN-Signale darstellen. Diese induzierten Signale werden dann durch eine geeignete Verstärker- und Integrationselektronik so aufbereitet, dass ein exaktes Abbild des CAN-Signals gewonnen wird. Das Signal kann auch durch nur eine einzige Rogowski-Spule gewonnen werden. Bei Verwendung von zwei Spulen erhält man aber differentielle Informationen, die weniger störanfällig sind. Dies ist bei dieser Ausgestaltung des erfindungsgemäßen Verfahrens wichtig, da die induzierten Signale sehr klein sind.

Die zweite Möglichkeit besteht in einer Messung des elektrischen Feldes, das durch die Spannung erzeugt wird, die auf den CAN-Drähten liegt. Diese zweite Möglichkeit kann dadurch realisiert werden, dass man einen Stecker auf dem CAN-Bus befestigt, wobei zumindest ein Draht durch eine Öffnung in dem Stecker geführt wird.

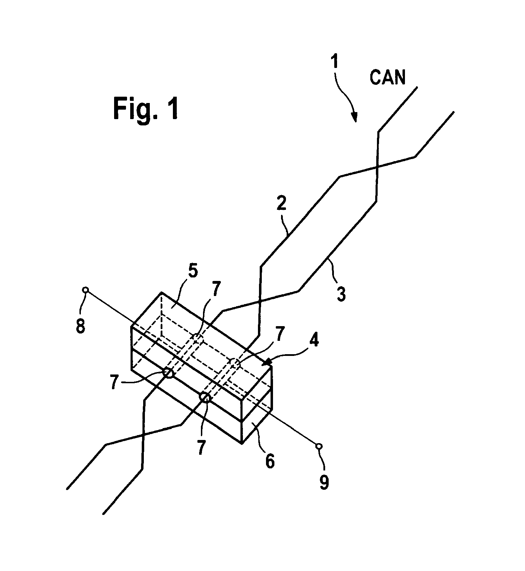

Figur 1 zeigt hierzu nähere Einzelheiten. In Figur 1 ist ein CAN-Bus 1 angedeutet, welcher zwei miteinander verdrillte Leitungen 2 (CAN1) und 3 (CAN2) besitzt. Die erste Leitung 2 und die zweite Leitung 3 werden von einem Sensor 4 umschlossen, der ein Oberteil 5 und ein Unterteil 6 aufweist. Das Oberteil und das Unterteil bestehen aus elektrisch nichtleitenden Material. Der Sensor 4 ist somit in zwei Hälften mittig geteilt. Die beiden einander zugewandten Flächen von Oberteil 5 und Unterteil 6 weisen jeweils zwei zueinander parallel verlaufende und einander zugeordnete Nuten 7 auf, die bevorzugt einen halbkreisförmigen Querschnitt besitzen. Zwei jeweils einander gegenüberliegende Nuten bilden somit in dem Sensor 4 eine zylinderförmige Bohrung, die die erste Leitung 2 beziehungsweise zweite Leitung 3 umschließt. Die Flächen der Nuten 7 sind mit einer in den Figuren nicht dargestellten Metallschicht ausgelegt. Die beiden Hälften 5 und 6 sind miteinander vorzugsweise lösbar verbunden. Bei zusammengefügten Hälften stoßen die beiden Metallschichten der dazugehörigen Nuten aufeinander und sind elektrisch miteinander verbunden, so dass jeweils zwei Metallschichten eine zylinderförmige Röhre bilden. Auf diese Weise ergibt sich zwischen den Leitungen 2 beziehungsweise 3 und den zugeordneten Metallröhren eine Kapazität, die nachfolgend vielfach als Kondensator bezeichnet wird.

Die Metallröhren sind mit elektrischen Abgriffen 8 und 9 verbunden, die die Ausgänge für den Sensor 4 bilden und an denen die an den Kapazitäten anliegende elektrische Spannung abgegriffen werden kann. Die Spannungen an den Leitungen 2 und 3 sind üblicherweise zueinander invers, wenn also an einer Leitung "high" anliegt dann ist die andere Leitung "low".

Da die über den Sensor 4 ausgekoppelten Signale sehr schwach sind und außerdem nicht alle Informationen auf dem CAN-Bus dem Fahrer des Fahrzeugs angezeigt werden sollen, werden die ausgekoppelten Signale einer Verstärker- und Auswerteelektronik zugeführte, die nachfolgend kurz als Auswerteelektronik 10 bezeichnet wird.

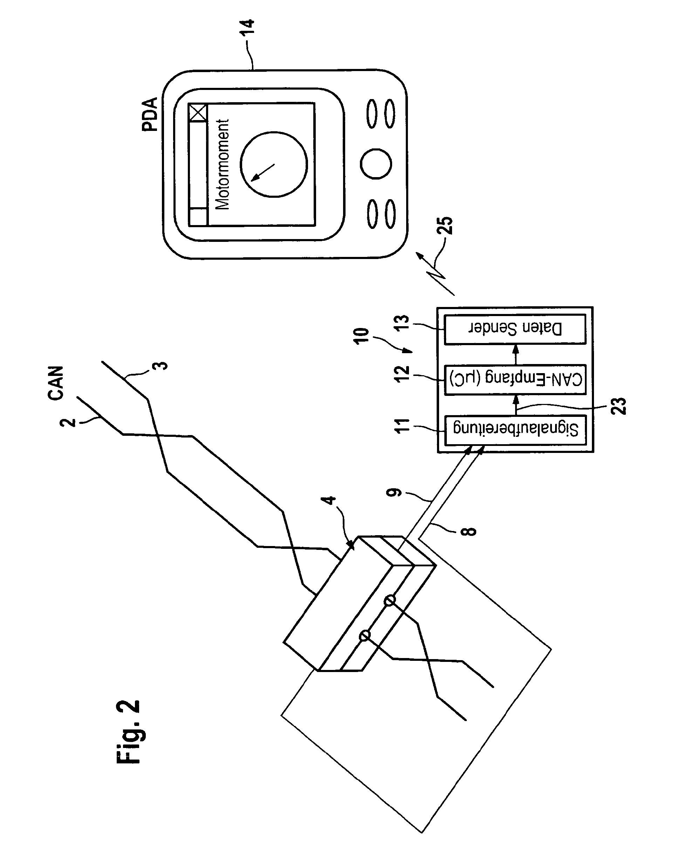

Wie aus Figur 2 ersichtlich setzt sich die Auswerteelektronik 10 aus einer Signalaufbereitung 11, einem CAN-Empfang 12 und einem Datensender 13 zusammen. In der Signalaufbereitung 11 werden die zueinander inversen, schwachen Ausgangssignale an den Abgriffen 8 und 9 des Sensors 4 verstärkt und diskriminiert. Nach dem die Eingangsignale der Auswerteelektronik 10 verstärkt und diskriminiert wurden besitzen sie ein normiertes Format mit high-Impulsen und low-Impulsen, welches von einem µ-Controller eingelesenen werden kann und über den Datensender 13, vorzugsweise drahtlos über eine Funkstrecke 25, zu einer Anzeige 14 gesendet werden kann. Da nicht alle Informationen auf dem CAN-Bus zu der Anzeige 14 übertragen werden sollen ist in dem einen µ-Controller aufweisenden CAN-Empfang 12 ein Filter vorgesehen, welcher an Hand der Kodierung der ausgekoppelten und verstärkten Signale nur diejenigen Informationen zu dem Datensender 13 weiterleitet, die für den Fahrer interessant sind.

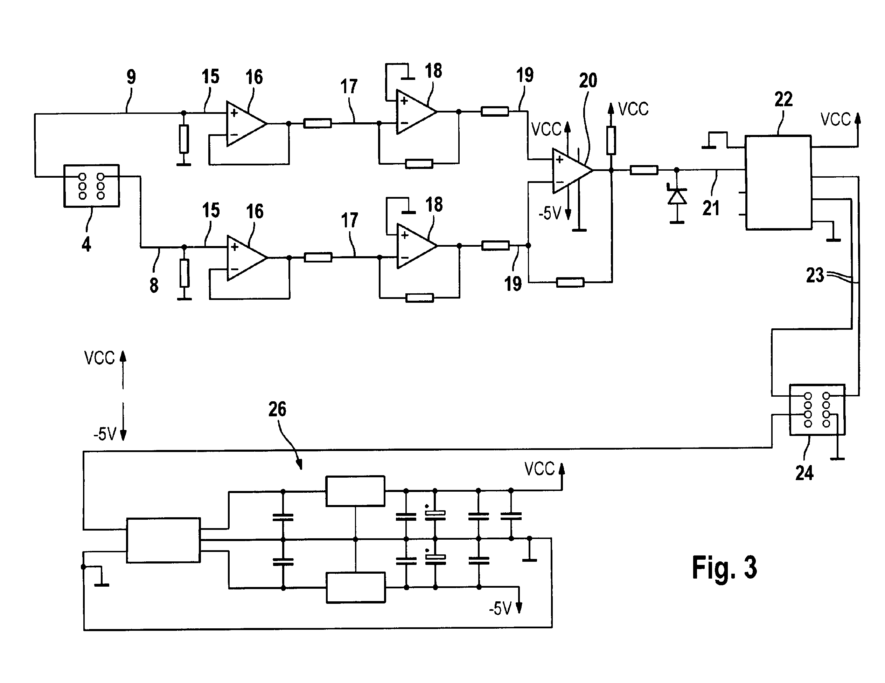

Als Anzeige 14 kann beispielsweise ein mobiler Computer, wie z.B. ein "Personal Digital Assistant" (PDA), oder eine andere geeignete Anzeigeeinrichtung vorgesehen werden. In Figur 2 ist beispielhaft die Anzeige des Motormomentes dargestellt. Weitere Einzelheiten zu der Auswerteelektronik 10 sind in Figur 3 gezeigt.

In Figur 3 sind Einzelheiten zu der zur Auswerteelektronik 10 gehörenden Signalaufbereitung 11 dargestellt. Wie schon im Zusammenhang mit Figur 1 und 2 erläutert gibt der Sensor 4 an den Abgriffen 8, 9, die seine Ausgänge bilden, schwache Signale ab, die den Signalen auf dem CAN-Bus 1 entsprechen. Da diese Signale recht schwach sind werden sie an den hochohmigen Eingang 15 eines Impedanzwandlers 16 geführt, an dessen niederohmigen Ausgang 17 die Signale dann anstehen. Wie weiter oben schon beschrieben sind die Signale auf den beiden Leitungen 2 und 3 des CAN-Busses zueinander invers. Entsprechendes gilt auch für die Signale auf den Ausgängen 8, 9 des Sensors 4. Daher ist jedem der beiden Leitungen 8, 9 jeweils ein eigener Impedanzwandler 15 und ein Verstärker 18 zugeordnet. Die Impedanzwandler 15 und die Verstärker 18 sind als Operationsverstärker ausgestaltet und haben den üblichen Aufbau.

Die verstärkten Signale an den Ausgängen 19 der beiden Verstärker 18 liegen an den beiden Eingängen eines Komparators 20 an. Der Komparator 20 bewertet, ob an seinen Eingängen zwei zueinander inverse Signale anliegen und welche Polarität sie besitzen und gibt dann dementsprechend ein Ausgangssignal auf den Eingang 21 eines CAN-Treibers 22 ab. Der CAN Treiber 22 formt die Signale an seinem Eingang 21 in Signale an seinen Ausgängen 23 um, die das auf dem CAN Bus übliche Format besitzen, wie es beispielsweise im Zusammenhang mit den Leitungen 2 und 3 weiter oben geschildert wurde. Die Signale auf den beiden Ausgängen 23 sind damit zueinander invers und können an dem Stecker 24 abgegriffen werden. Auf diese Weise stehen an dem Stecker 24 Signale in einer Form zur Verfügung, die den Signalen auf den Leitungen 1 und 2 entsprechen, wobei aber keine Rückwirkungen auftreten, wie sie bei einer direkten Ankoppelung an die Leitungen 1 und 2 zu erwarten sind. Die Schaltung nach Figur 3 wird von einem Netzteil 26 üblichen Aufbaus gespeist.

Kurz zusammengefasst lässt sich somit die erfindungsgemäße Ausgestaltung der Schaltungsanordnung dadurch realisieren, dass man einen Stecker auf den CAN-Bus aufsteckt, der jeden Draht durch eine Doppelnut führt. Die Doppelnuten 7 sind mit Metall ausgekleidet, sodass eine Struktur entsteht, die einem Koaxial-Kondensator entspricht (siehe Figur 1). Das kapazitiv auf die Doppelnuten gekoppelte Signal des CAN-Busses 1 wird wieder durch eine geeignete Verstärker- und Auswerteelektronik 11 zurück gewonnen (siehe Figur 3).

Das aufbereitete Signal kann dann von einem üblichen CAN-Controller 22 eingelesen werden.

Um die Information für den Fahrer tatsächlich nutzbar zu machen muss die empfangene Information noch durch einen Mikrocontroller 12 decodiert werden und an eine Anzeigeeinheit weitergeleitet werden. Als universelle Anzeigeeinheit 14 eignet sich z.B. ein PDA, an den die Daten, z.B. über ein BLUETOOTH(R)-Funkmodem oder W-LAN 25 zugesendet werden. Auf dem PDA muss dann ein spezielles Programm die Daten aufbereiten und darstellen. Das Gesamtsystem ist in Figur 2 dargestellt.

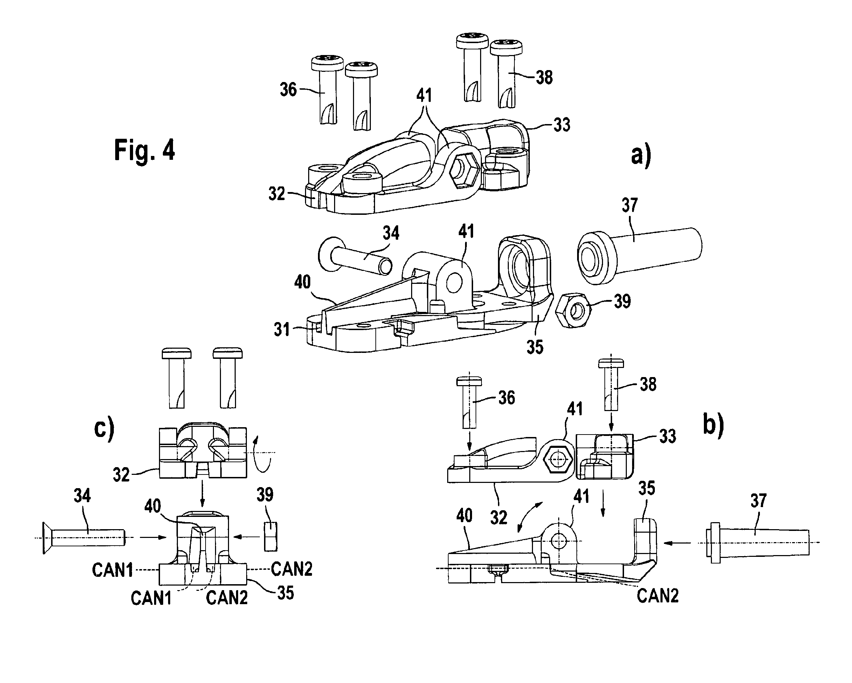

Fig. 4 zeigt ein Beispiel für eine erfindungsgemäße Abgriffvorrichtung, welche klappbar ausgestaltet ist und daher aus zwei gegeneinander schwenkbaren Teilen 35 und 32 besteht. Die Teile, die aus zum teil leitfähig beschichtetem Kunststoff gefertigt sind, werden durch Schraube 34 und Mutter 39 drehbar verbunden. Hierdurch ist die Abgriffvorrichtung durch den Kfz-Anwender leicht zu handhaben, da keine Beschädigung des zum Kfz gehörenden CAN-Kabels notwendig ist. Die Abgriffvorrichtung ist zur besseren Raumausnutzung im Gegensatz zum Abgriff in Fig. 1 parallel zum CAN-BUS angeordnet. Die von der Abgriffvorrichtung abgeführten Leitungen verlaufen deshalb im wesentlichen parallel zum CAN-BUS und zur Längsachse der Abgriffvorrichtung. In die Abgriffvorrichtung kann das CAN-Kabel CAN1, CAN2 durch einen schmalen Steg 40 getrennt parallel zur längeren Achse des Steckers in Nuten 31 geführt eingelegt werden. 40 bezeichneten einen schmalen Steg, welcher im vorderen Bereich der Abgriffvorrichtung positioniert ist und bei der Montage eine einfachere Trennung der Signalkabel ermöglicht. Die CAN-Kabel CAN1, CAN2 werden nur über eine kurze Distanz durch die Abgriffvorrichtung geführt, damit dass CAN-BUS Kabel nur auf einer kurzen Länge aufgetrennt werden muss. Die mit einem Schraubenscharnier 41 befestigte Verschlussklappe 32, die zweckmäßigerweise entweder durch Schrauben 36 schließbar oder einrastend gestaltet ist, ermöglicht mehrfaches Öffnen und Schließen. Die im hinteren Bereich der Abgriffvorrichtung abgehenden Signalkabel werden über eine mit Schrauben 38 an Teil 35 montierte Abdeckung 33 entlastet. Zusätzlich verhindert Knickschutztülle 37 eine Beschädigungen des nichtgezeichneten Anschlusskabels durch Abknicken.

Der besondere Vorteil des beschrieben Systems besteht darin, dass zum einen kein Eingriff in die Fahrzeugverkabelung notwendig ist, zum anderen keinerlei Rückwirkung auf das Fahrzeugnetzwerk, auch im Fehlerfall von Software oder Hardware, möglich ist und schließlich durch die Trennung der Signalgewinnung und der Anzeigeeinheit eine sehr einfache Anpassung an verschiedene Fahrzeuge möglich ist, da nur die Software auf dem PDA angepasst werden muss.

## Patentansprüche

1. Verfahren zur drahtlosen, im wesentlichen rückkopplungsfreien Auskopplung und Übertragung von auf einem Leitungsbus (1,2) geführten Signalen, **dadurch gekennzeichnet, dass** ein durch die von den Signalen verursachten Felder gespeister Sensor (4) die Leitungssignale wiedergebende Sensorsignale ausgibt, dass die ausgegebenen Sensorsignale in einer Signalaufbereitung (11) verstärkt und in eine definierte digitale Signalform (22) umgeformt werden, und dass anschließend die definierten digitalen Signale durch eine digitale Schaltung, welche insbesondere einen Mikrocontroller (12) umfasst, entsprechend der ihnen zugeordneten Bedeutung gefiltert und die gefilterten Signale einer Anzeigeeinrichtung (14) oder einem weiteren Gerät über einen zusätzlichen Bus drahtlos oder über eine Leitung zugeführt werden.

2. Schaltungsanordnung zur drahtlosen, im wesentlichen rückkopplungsfreien Auskopplung und Übertragung von auf einem Leitungsbus (1,2) geführten Signalen, insbesondere zur Durchführung des Verfahrens nach Anspruch 1, **dadurch gekennzeichnet, dass** ein Sensor (4) vorgesehen ist, der durch von den Signalen verursachte Felder gespeist wird und die Leitungssignale wiedergebende Sensorsignale (an 8,9) ausgibt, dass eine Signalaufbereitung (11) vorgesehen ist, die die von dem Sensor (4) ausgegebenen Sensorsignale verstärkt und in eine definierte digitale Signalform (22) umformt und dass ein Mikrocontroller (12) vorgesehen ist, der die definierten digitalen Signale entsprechend der ihnen zugeordneten Bedeutung filtert, wobei die gefilterten Signale einer Anzeigeeinrichtung (14) oder einem weiteren Gerät über einen zusätzlichen Bus drahtlos oder über eine Leitung zugeführt werden.

3. Schaltungsanordnung nach Anspruch 2, **dadurch gekennzeichnet, dass** der Leitungsbus (1) ein CAN-Bus eines Kraftfahrzeuges ist, an den mehrere zu überwachende und/oder zu steuernde Geräte des Kraftfahrzeugs angeschlossen sind, und dass der Sensor (4) durch elektrische oder magnetische Felder gespeist wird, die aus den Signalen auf dem CAN-Bus (1) resultieren.

4. Schaltungsanordnung nach Anspruch 2 oder 3, **dadurch gekennzeichnet, dass** der Sensor (4) durch elektrische Felder gespeist wird, die aus Signalen auf dem CAN-Bus (1) resultieren.

5. Schaltungsanordnung nach Anspruch 4, **dadurch gekennzeichnet, dass** der Sensor (4) derart aufgebaut ist, dass er zumindest hinsichtlich einer Leitung (1 beziehungsweise 2) des CAN-Busses (1) als Kondensator wirkt, an dem die ausgekoppelten elektrischen Signale (an 8,9) abgreifbar sind.

6. Schaltungsanordnung nach Anspruch 4 oder 5, **dadurch gekennzeichnet, dass** der CAN-Bus(1) zwei Leitungen (2,3) aufweist, wobei die zweite Leitung (2) zu den Signalen auf der ersten Leitung (1) inverse Signale führt und dass der Sensor (4) derart aufgebaut, dass er hinsichtlich der beiden Leitungen (1,2) des CAN-Busses (1) zwei getrennte Kondensatoren bildet.

7. Schaltungsanordnung nach einem der Ansprüche 2 bis 6, **dadurch gekennzeichnet, dass** der Sensor derart aufgebaut ist, dass er mittels einer Steckverbindung (4) lösbar auf den CAN-Bus (1) aufgesteckt werden kann.

8. Schaltungsanordnung nach einem der Ansprüche 5 bis 7, **dadurch gekennzeichnet, dass** der Sensor (4) aus zwei vorzugsweise symmetrisch ausgestalteten Sensorhälften (5,6) gebildet ist, welche der zugeordneten Leitung (1 bzw. 2) entsprechende Nuten (7) aufweisen, die mit einer einen Abschnitt einer Platte des Kondensators bildenden Beschichtung derart versehen sind, dass beim Zusammenstecken der beiden Sensorhälften eine einheitliche Kondensatorplatte gebildet wird.

9. Schaltungsanordnung nach einem der Ansprüche 2 bis 8, **dadurch gekennzeichnet, dass** die durch den Sensor erfassten Signale an ein Navigationssystem weitergeleitet und dort insbesondere zur Verbesserung der Positionsgenauigkeit verwendet werden.

10. Schaltungsanordnung nach einem der Ansprüche 2 bis 9, **dadurch gekennzeichnet, dass** die durch den Sensor erfassten Signale über eine Funkschnittstelle, wie beispielsweise BLUETOOTH(R), WLAN, ZigBee(TM) an eine externes Gerät, insbesondere an ein PDA, einen Laptop oder einen entsprechenden tragbaren Computer übertragen werden.

11. Navigationssystem, **dadurch gekennzeichnet, dass** dieses in einem mobilen Computer implementiert ist und dass dieses eine Schaltungsanordnung gemäß einem der Ansprüche 2 bis 10 umfasst.

## Claims

1. Method for the wireless, substantially feedback-free output and transmission of signals carried on a line bus (1, 2), **characterized in that** a sensor (4) fed by the fields caused by the signals outputs sensor signals representing the line signals, **in that** the sensor signals which have been output are amplified in a signal conditioning unit (11) and are converted into a defined digital signal waveform (22), and **in that** the defined digital signals are then filtered according to the significance associated with them by a digital circuit which comprises, in particular, a microcontroller (12), and the filtered signals are supplied to a display device (14) or to a further device via an additional bus in a wireless manner or via a line.

2. Circuit arrangement for the wireless, substantially feedback-free output and transmission of signals carried on a line bus (1, 2), in particular for carrying out the method according to Claim 1, **characterized in that** a sensor (4) is provided, which sensor is fed by fields caused by the signals and outputs sensor signals (at 8, 9) representing the line signals, **in that** a signal conditioning unit (11) is provided, which signal conditioning unit amplifies the sensor signals which have been output by the sensor (4) and converts them into a defined digital signal waveform (22), and **in that** a microcontroller (12) is provided, which microcontroller filters the defined digital signals according to the significance associated with them, the filtered signals being supplied to a display device (14) or to a further device via an additional bus in a wireless manner or via a line.

3. Circuit arrangement according to Claim 2, **characterized in that** the line bus (1) is a CAN bus of a motor vehicle, to which a plurality of devices of the motor vehicle which are to be monitored and/or controlled are connected, and **in that** the sensor (4) is fed by electric or magnetic fields resulting from the signals on the CAN bus (1).

4. Circuit arrangement according to Claim 2 or 3, **characterized in that** the sensor (4) is fed by electric fields resulting from signals on the CAN bus (1).

5. Circuit arrangement according to Claim 4, **characterized in that** the sensor (4) is constructed in such a manner that it acts, at least with respect to a line (1 or 2) of the CAN bus (1), as a capacitor at which the output electrical signals (at 8, 9) can be tapped off.

6. Circuit arrangement according to Claim 4 or 5, **characterized in that** the CAN bus (1) has two lines (2, 3), the second line (2) carrying inverse signals to the signals on the first line (1), and **in that** the sensor (4) is constructed in such a manner that it forms two separate capacitors with respect to the two lines (1, 2) of the CAN bus (1).

7. Circuit arrangement according to one of Claims 2 to 6, **characterized in that** the sensor is constructed in such a manner that it can be releasably plugged onto the CAN bus (1) by means of a plug connection (4).

8. Circuit arrangement according to one of Claims 5 to 7, **characterized in that** the sensor (4) is formed from two sensor halves (5, 6) which are preferably symmetrical and have grooves (7) which correspond to the associated line (1 or 2) and are provided with a coating forming a section of a plate of the capacitor in such a manner that a unified capacitor plate is formed when the two sensor halves are plugged together.

9. Circuit arrangement according to one of Claims 2 to 8, **characterized in that** the signals detected by the sensor are forwarded to a navigation system and are used there, in particular, to improve the positional accuracy.

10. Circuit arrangement according to one of Claims 2 to 9, **characterized in that** the signals detected by the sensor are transmitted to an external device, in particular to a PDA, a laptop or a corresponding portable computer, via a radio interface, for example Bluetooth(R), WLAN, ZigBee (TM).

11. Navigation system, **characterized in that** it is implemented in a mobile computer, and **in that** it comprises a circuit arrangement according to one of Claims 2 to 10.

## Revendications

1. Procédé d'émission et de transfert sans fil, essentiellement sans rétroaction, de signaux conduits sur un bus conducteur (1, 2),
**caractérisé en ce que**
un détecteur (4) alimenté par les champs provoqués par les signaux délivre des signaux de détecteur qui reproduisent les signaux du conducteur,
**en ce que** les signaux émis par le détecteur sont amplifiés dans une préparation (11) de signaux et sont convertis en une forme numérique définie (22) de signaux,
**en ce qu'**ensuite, les signaux numériques définis sont filtrés par un circuit numérique qui comporte en particulier un microcontrôleur (12) en correspondance à l'importance qui leur est associée et
**en ce que** les signaux filtrés sont apportés par un bus supplémentaire à un dispositif d'affichage (14) ou à un autre appareil, sans fil ou par un conducteur.

2. Circuit d'émission et de transmission sans fil et essentiellement sans rétroaction de signaux conduits sur un bus conducteur (1, 2), en particulier en vue de la mise en oeuvre du procédé selon la revendication 1, **caractérisé en ce que**
il présente un détecteur (4) qui est alimenté par les champs provoqués par les signaux et qui délivre des signaux de détecteur (en 8, 9) qui reproduisent les signaux du conducteur,
**en ce qu'**une préparation (11) des signaux est prévue pour amplifier les signaux délivrés par le détecteur (4) et les convertit en une forme numérique définie (22) de signaux,
**en ce qu'**un microcontrôleur (12) filtre les signaux numériques définis en correspondance à l'importance qui leur est associée et
**en ce que** les signaux filtrés sont apportés par un bus supplémentaire sans fil ou par un conducteur à un dispositif d'affichage (14) ou à un autre appareil, sans fil ou par un conducteur.

3. Circuit selon la revendication 2, **caractérisé en ce que** le bus conducteur (1) est un bus CAN de véhicule automobile auquel plusieurs appareils du véhicule automobile qui doivent être surveillés et/ou commandés sont raccordés et **en ce que** le détecteur (4) est alimenté par des champs électriques ou magnétiques qui résultent des signaux présents sur le bus CAN (1).

4. Circuit selon les revendications 2 ou 3, **caractérisé en ce que** le détecteur (4) est alimenté par des champs électriques qui résultent des signaux présents sur le bus CAN (1).

5. Circuit selon la revendication 4, **caractérisé en ce que** le détecteur (4) est constitué de telle sorte qu'il agit comme condensateur au moins pour un conducteur (1 ou 2) du bus CAN (1), condensateur sur lequel les signaux électriques émis (en 8, 9) peuvent être repris.

6. Circuit selon les revendications 4 ou 5, **caractérisé en ce que** le bus CAN (1) présente deux conducteurs (2, 3), le deuxième conducteur (2) conduisant des signaux inverses des signaux présents sur le premier conducteur (1) et **en ce que** le détecteur (4) est constitué de telle sorte qu'il forme deux condensateurs distincts pour les deux conducteurs (1, 2) du bus CAN (1).

7. Circuit selon l'une des revendications 2 à 6, **caractérisé en ce que** le détecteur est constitué de telle sorte qu'il puisse être enfiché de manière libérable sur le bus CAN (1) au moyen d'une fiche de raccordement (4).

8. Circuit selon l'une des revendications 5 à 7, **caractérisé en ce que** le détecteur (4) est formé de deux moitiés de détecteur (5, 6), de préférence de configuration symétrique, qui présentent des rainures (7) qui correspondent aux conducteurs (1 ou 2) respectifs et qui sont dotées d'un revêtement qui forme une partie d'une plaque du condensateur, de telle sorte qu'une plaque unitaire de condensateur soit formée lorsque les deux moitiés de détecteur sont assemblées.

9. Circuit selon l'une des revendications 2 à 8, **caractérisé en ce que** les signaux saisis par le détecteur sont transmis à un système de navigation ou ils sont utilisés en particulier pour améliorer la précision du positionnement.

10. Circuit selon l'une des revendications 2 à 9, **caractérisé en ce que** les signaux saisis par le détecteur sont transmis à un appareil externe, en particulier un PDA, un ordinateur portable ou un calculateur portable approprié, par l'intermédiaire d'une interface radio, par exemple une interface BLUETOOTH (R), WLAN ou ZigBee (TM).

11. Système de navigation **caractérisé en ce qu'**il est mis en oeuvre dans un ordinateur mobile et **en ce que** ce dernier présente un circuit selon l'une des revendications 2 à 10.
